# EUROPEAN PATENT SPECIFICATION

(11) **EP 1 991 014 B1**
(45) Date of publication and mention of the grant of the patent: **28.11.2012**
(21) Application number: 07425277.6
(22) Date of filing: 11.05.2007
(51) Int. Cl.: H04W 48/18

(54) **Method to attach a mobile station to a second generation packet network shared between different operators**
Verfahren zur Anhängung einer mobilen Station an ein Paketnetzwerk der zweiten Generation, das von mehreren Betreibern geteilt wird
Procédé pour relier une station mobile à un réseau de paquet de deuxième génération partagé par différents opérateurs

(43) Date of publication of application: 12.11.2008
(73) Proprietor: Nokia Siemens Networks S.p.A., 20126 Milano (IT)
(72) Inventor: Cavalli, Simona, 21027 Ispra (VA) (IT); Motolese, Valeria, 20136 Milano (IT)

(56) References cited:
- EP-A- 1 392 071
- WO-A-03/017704
- WO-A-2005/091661
- 3GPP: "Technical Specification Group Services and System Aspects; Network Sharing; Architecture and functional description (Release 6)" 3GPP TS 23.251 V6.6.0, [Online] March 2006 (2006-03), pages 1-18, XP002454347 Retrieved from the Internet: URL:http://www.3gpp.org/ftp/Specs/archive/ 23%5Fseries/23.251/> [retrieved on 2007-10-08]
- 3GPP: "Technical Specification Group Services and System Aspects; Intra-domain connection of Radio Access Network (RAN) nodes to multiple Core Network (CN) nodes (Release 7)" 3GPP TS 23.236 V7.0.0, [Online] December 2006 (2006-12), pages 1-37, XP002454348 Retrieved from the Internet: URL:http://www.3gpp.org/ftp/Specs/archive/ 23%5Fseries/23.236/> [retrieved on 2007-10-08]

## Description

### FIELD OF THE INVENTION

The present invention relates to the field of Public Land Mobile Networks (PLMN), and more precisely to a method to attach a mobile station to a second generation packet network shared between different operators in case of random identity. A list of used acronyms is reported at the end of the description.

The invention is developed with specific attention paid to its possible use in second generation (2G or 2.5G) PLMNs that support enhanced General Packet Radio Service (GPRS) formerly standardized by ETSI and presently by 3GPP.

The current reference texts for the main standards involved with network sharing between different operators are the following:
- 3GPP TS 23.251 - Version 6.6.0 (Release 6) - Network Sharing; Architecture and functional description. Chapter 4, from 4.1 to 4.2.5. Chapter 5, subclauses 5.1 and 5.2.
- 3GPP TS 23.236 - Version 7.0.0 (Release 7) - Intra-domain connection of Radio Access Network (RAN) nodes to multiple Core Network (CN) nodes. Chapter 4, from 4.2 to 4.5. Chapter 5, all subclause 5.3 with the exception of 5.3.3.
- 3GPP TS 23.122 - Version 7.8.0 (Release 7) - Non-Access-Stratum (NAS) functions related to Mobile Station (MS) in idle mode. Chapter 2; Chapter 3, subclauses 3.4.2 and 3.5.
- 3GPP TS 23.003 - Version 7.3.0 (Release 7) - Numbering, addressing and identification - Chapter 2.
- 3GPP TS 23.060 - Version 6.4.0 (Release 6) - General Packet Radio Service (GPRS). Service description. All text, in particular subclauses 6.4, 6.5, 6.5.1, 6.5.3.
- 3GPP TS 44.018 - Version 7.3.0 (Release 7) Mobile radio interface layer 3 specification; Radio Resource Control (RRC) protocol, subclauses 3.2.2.1, 9.1.35
- 3GPP TS 44.060 - Version 7.3.0 (Release 7) - General Packet Radio Service (GPRS). Mobile Station (MS) - Base Station System (BSS) interface. Radio Link Control (RLC)/Medium Access Control (MAC) (RLC/MAC) protocol. Chapter 10.
- 3GPP TS 21.905 - Version 6.7.0 (Release 6) - Vocabulary of 3GPP Specifications
- 3GPP TS 23.002 - Version 6.9.0 (Release 6) - Technical Specification Group Services and System Aspects; Network Architecture
- 3GPP TS 23.012 - Version 6.3.0 (Release 6) - Technical Specification Group Core Network; Location Management procedures
- 3GPP TS 29.002 - Version 7.7.0 (Release 7) - Technical Specification Group Core Network and Terminals; Mobile Application Part (MAP) specification

### BACKGROUND ART

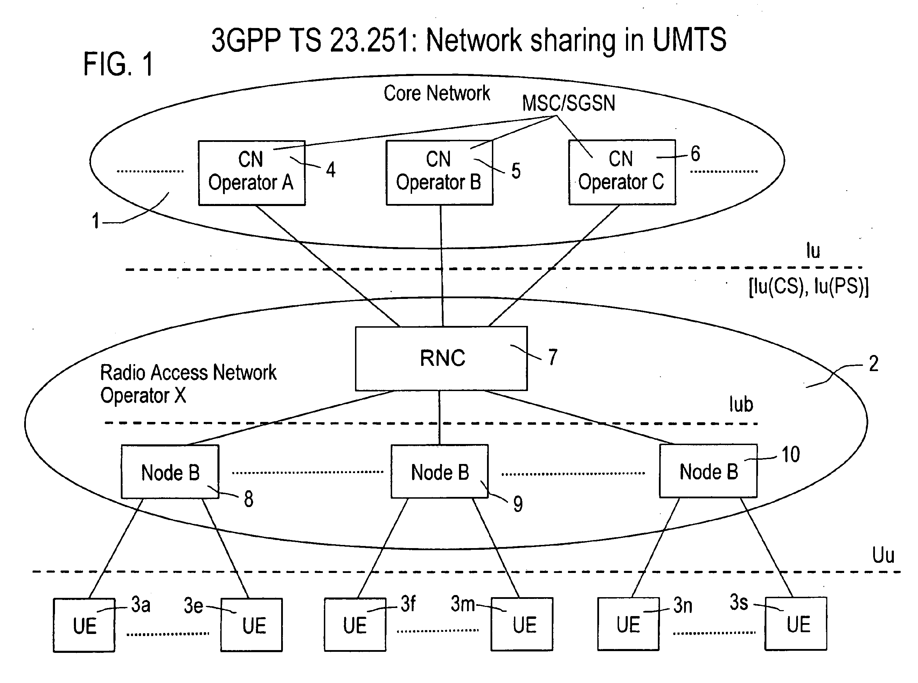

According to TS 23.251, network sharing is a way for PLMN operators to share the heavy deployment costs for mobile networks, especially in the roll-out phase. In the current mobile telephony marketplace, functionality that enables various forms of network sharing is becoming more and more important. A Multi-operator Core Network (MOCN) functional architecture valid for a third generation (3G) PLMN is depicted in fig.1 derived from TS 23.251.

With reference to the simplified scenario of fig.1, we see a PLMN subdivided in Core Network (CN) 1, Radio Access Network (RAN) 2, and a plurality of User Equipments (UE) indicated with 3a-3e, 3f-3m, and 3n-3s. The CN 1 is connected to the RAN 2 through the lu interface; the RAN 2 is connected to the UEs through the Uu interface on the air. The Core Network 1 includes nodes indicated as 4, 5, and 6 shared between several network operators as A, B, and C. Nodes 4, 5, and 6, either Serving GPRS Support Node (SGSN) for packet service or Mobile Switching Centre (MSC) for circuit switched service, are interfaced to the Packet Switched Public Data Network (PSPDN) or the Public Switched Telephone Network (PSTN) for voice calls. The lu interface is subdivided in lu(CS) toward MSC and lu(PS) towards SGSN. The RAN 2 includes a Radio Network Controller (RNC) 7 interfaced to the CN 1 through the lu interface, and to a plurality of Base Stations (BS) 8, 9, 10, called Node B, through the lub interface. Each Node B is connected in the air to a respective set of UEs.

In operation, the core network 1 is envisaged by the UEs as different core networks managed by different operators independently to each other. The UE is allowed to do this because the Network broadcasts a list of network identifiers in each cell and the UE, after having read the list, notifies its RAN (in particular the RNC) the network identifier of the network it wants to be connected. This network identifiers is called: "PLMN ID" (Public Land Mobile Network Identity).

Basically 3G network operators own also 2G networks and for this reason they are asking solutions also for 2G networks, where up to now such a shared solution as in 3G does not exist. Currently, in second generation PLMNs (e.g. GSM), the network is allowed to broadcast in each cell the only PLMN ID of the home PLMN (the PLMN the cell belongs to). Unfortunately, 2G topics are not supported in TS 23.251. 2G network operators at the moment can exploit TS 23.236 only, where the concept of pool-area per CS and PS domain is introduced assuming the domain is controlled by one and only one network operator.

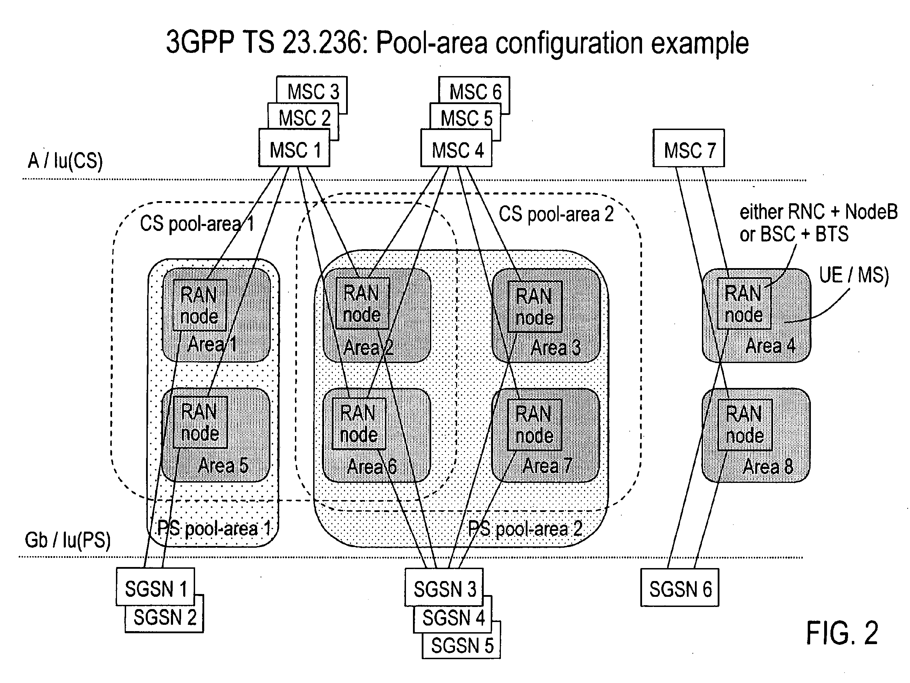

Fig.2 reported from TS 23.236 shows most of the possible pool-area configurations. It contains CS pool-area 1 (RAN area 1, 2, 5, 6 served by MSCs 1, 2, 3), CS pool-areas 2 (RAN area 2, 3, 6, 7 served by MSCs 4, 5, 6), PS pool-area 1 (RAN area 1, 5 served by SGSNs 1, 2) and PS pool-area 2 (RAN area 2, 3, 6, 7 served by SGSNs 3, 4, 5). In addition the RAN areas 4 and 8 are served by MSC 7 and SGSN 6 without any usage of the Intra Domain Connection of RAN Nodes to Multiple CN Nodes. Although not expressly indicated in figure, the SGSN nodes are connected to an external PSPDN via a Gateway GPRS Support Node (GGSN), and the MSCs nodes are connected to an external PSTN via a Gateway MSC (GMSC) node. The possibility to configure overlapping pool-areas is shown by the CS pool-areas 1 and 2. The PS pool-areas 1 and 2 are configured non-overlapping. The pool-areas of the CS and the PS domain may be configured identical as CS pool-area 2 and PS pool-area 2 or they may be configured differently as shown by CS pool-area 1 and PS pool-area 1. The number or capacity of CN nodes is configured independently for each pool-area. The usage of the Intra Domain Connection of RAN Nodes to Multiple CN Nodes may be configured in parts of the network only. It co-exists with other areas not using this feature as shown in the figure with RAN areas 4 and 8 which are served by MSC 7 and SGSN 6.

Fig.2 is referred to both 2G and 3G networks, indifferently, so either A or lu(CS) interface is used between CS pool-areas and MSCs, and either Gb or lu(PS) interface is used between PS pool-areas and SGSNs; possible operations are in lu mode or in A/Gb mode.

The document Ericsson Telefon AB: "Methods involving a core network node that is handling a mobile subscriber and initiates a request to a second core network node to handle said mobile subscriber"; WO 03/017704A1 (Ericsson Telefon AB [SE]; Frode Bjelland [NO] 21.August2001 (2001-08-21) describes a core network node initiating a request of handling a mobile subscriber to another core network node in a mobile telephony network.

The present invention is aimed to be used in 2G networks owned by different operators (not limitedly to pool-areas) for the only A/Gb mode, and more precisely to the only Gb mode. In operation, a pool area is served by one or more CN nodes in parallel. An MS is served by one dedicated CN node of a pool-area as long as it is in the radio

coverage of the pool-area. The service provision by multiple CN nodes within a pool-area enlarges the served area compared to the service area of one CN node. This results in reduced inter CN node updates, handovers and relocations and it reduces the HLR update traffic and provide flexibility in the network. The Network Resource identifier (NRI) identifies uniquely an individual CN node out of all CN nodes, which serve in parallel a pool-area. The length of the NRI shall be the same in all nodes of a domain in one pool-area. In areas where pool-areas overlap the NRI identifies uniquely a CN node out of all CN nodes, which serve all these overlapping pool-areas, i.e. an NRI identifies uniquely a CN node within a RAN node. The NRIs of the CS and the PS domain are independent of each other as the PS and the CS domain CN nodes are addressed independently.

More than one NRI may be assigned to a CN node. The NRI is part of the Temporary Mobile Subscriber Identity, either called TMSI in the CS domain or P-TMSI in the PS domain, which is assigned by the serving CN node to the MS. Each CN node which supports the "Intra Domain Connection of RAN Nodes to Multiple CN Nodes" is configured with its specific one or more NRI(s). The (P-)TMSI allocation mechanism in the CN node generates (P-)TMSIs which contain a configured NRI in the relevant bit positions. The NRI has a flexible length between 10 and 0 bits (0 bits means the NRI is not used and the feature is not applied). In A/Gb-mode for the A interface the RAN node derives the NRI from any initial Non-Access-Stratum (NAS) signalling message. The RAN node masks the significant bits out of the TMSI to determine the NRI, which identifies the CN node. In A/Gb-mode for the Gb interface the RAN node derives the NRI from a Temporary Logical Link Identity (TLLI). The RAN node masks the significant bits out of the TLLI to determine the NRI, which identifies the CN node. This function is used in RAN nodes and potentially in CN nodes. In the RAN node the function selects the specific CN node (i.e. MSC or SGSN) to which initial NAS signalling messages or Logical Link Control (LLC) frames are routed.

The NRI identifies the specific CN node. If the NAS Node Selection Function has a CN node address configured for the NRI derived from the initial NAS signalling message or from the LLC frame then this message or frame is routed to this address. If no CN node address is configured for the derived NRI or if no NRI can be derived (e.g. the MS indicated an identity which contains no NRI) then the NAS Node Selection Function selects an available CN node (e.g. according to load balancing) and routes the message or LLC frame to the selected CN node. The Base Station Controller (BSC) provides the NAS Node Selection Function. The MS sends the TLLI to the BSC. The NRI is part of the P-TMSI and therefore also contained in the 'local TLLI' or in the 'foreign TLLI'. The number of bits out of the TLLI which are significant for the NRI is configured in the BSC (O&M).

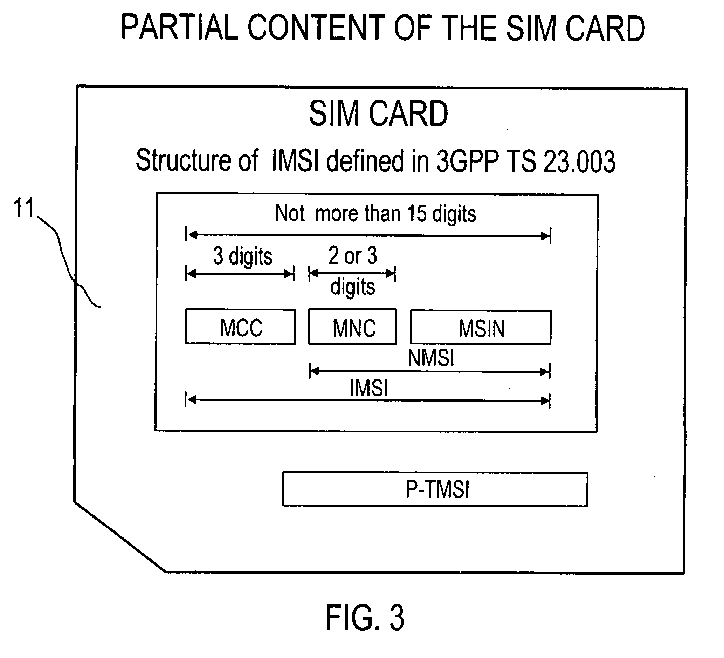

Considered the importance of a routing information allowing addressing a specific Core Network Node for the present invention, the following detailed description is excerpted from TS 23.003, chapter 2. According to ITU-T, a unique International Mobile Subscriber Identity (IMSI) shall be allocated to each mobile subscriber in the GSM/UMTS system. IMSI is stored in the SIM card embedded in the mobile phone. As shown in **fig.3****,** which represents the partial content of a SIM card 11, IMSI shall consist of no more than 15 decimal digits (0 through 9) only, and is composed of the following three parts:
1) Mobile Country Code (MCC) consisting of three digits. The MCC identifies uniquely the country of domicile of the mobile subscriber;
2) Mobile Network Code (MNC) consisting of two or three digits for GSM/UMTS applications. The MNC identifies the home PLMN of the mobile subscriber. The length of the MNC (two or three digits) depends on the value of the MCC.
3) Mobile Subscriber Identification Number (MSIN) identifying the MS within a PLMN. The length of the MSIN spans up to the remaining digits.
The National Mobile Subscriber Identity (NMSI) consists of the MNC concatenated to MSIN.

A PLMN is uniquely identified by its PLMN ID which consists of MCC concatenated to MNC both read in the SIM card. The allocation of MCCs is administered by the ITU-T (see COMPLEMENT TO ITU-T RECOMMENDATION E.212). The allocation of NMSI is the responsibility of each administration. If more than one PLMN exists in a country, the same MNC should not be assigned to more than one PLMN. The allocation of IMSIs should be such that not more than the digits MCC + MNC of the IMSI have to be analyzed in a foreign PLMN for information transfer. The structure of TMSI is defined in subclause 2.4.

In order to support the subscriber identity confidentiality service the VLRs and SGSNs may allocate/re-allocate P-TMSIs to visiting mobile subscribers. The VLR and SGSNs must be capable of correlating an allocated P-TMSI with the IMSI of the MS to which it is allocated. The TLLI to be used is assembled by the MS either on the basis of the P-TMSI (e.g. local or foreign TLLI), or directly (e.g. random TLLI). The structure of TLLI is defined in subclause 2.6 as shown in the following **TABLE 1.**

| **31** | **30** | **29** | **28** | **27** | **26 to 0** | **Type of TLLI** |
|---|---|---|---|---|---|---|
| 1 | 1 | T | T | T | T | Local TLLI |
| 1 | 0 | T | T | T | T | Foreign TLLI |
| 0 | 1 | 1 | 1 | 1 | R | Random TLLI |
| 0 | 1 | 1 | 1 | 0 | A | Auxiliary TLLI |
| 0 | 1 | 1 | 0 | X | X | Reserved |
| 0 | 1 | 0 | X | X | X | Reserved |
| 0 | 0 | 0 | 0 | G | G | Part of the assigned G-RNTI |
| 0 | 0 | 0 | 1 | R | R | Random G-RNTI |

where 'T', 'R', 'A' and 'X' indicate bits which can take any value for the type of TLLI. More precisely, 'T' indicates bits derived from a P-TMSI, 'R' indicates bits chosen randomly, 'A' indicates bits chosen by the SGSN, The TLLI structure (over 32 bits) allows to introduce a MS network subscription information without any changes to the structure itself. The 27 bits 'R' chosen randomly (by the MS).

TLLI is used for addressing at the Logical Link Control (LLC) layer. In the reference protocol stacks used at the various interfaces the LLC is situated below the SNDC layer and over the RLC/MAC layers. The LLC protocol provides a reliable logical link between the MS and its SGSN. A LLC connection is maintained as the MS moves between cells served by the same SGSN. When the MS moves to a cell being served by a different SGSN, the existing connection is released and a new logical connection is established with the new SGSN through a relevant procedure of update (e.g. RA, LA, cell update).

### APPROACH TO THE TECHNICAL PROBLEM

As previously said for 2G PLMNs, the BSC determines the CN node to route the MS from the Network Resource Identifier (NRI). The NRI is available at the MS when a first registration with a CN node, e.g. the SGSN, of the serving network occurred successfully; the serving network may be the subscribed one, that is the HPLMN, or a visited (partner) one, that is a VPLMN in case the HPLMN is not available. In such a case a TMSI or a P-TMSI, respectively for the CS or the PS domain, was sent by the CN to the MS. For the first registration, basically when the MS is switched on, no TMSI or P-TMSI are available or valid; in case of CS domain the MS access the network by means of the IMSI. The IMSI contains the MCC and the MNC Information Elements (IEs) shown in fig.3. When no NRI is provided or when the NRI is not associated to any CN nodes, the Load Balancing function, if applicable (i.e. if TS 23.236 is supported), and that is implementation specific, tries to find a right CN node among the ones available in the pool regardless of PLMN ID information. The MS never accesses the PS domain by IMSI but it does it by means of the TLLI. Only when TLLI is Local or Foreign it contains a NRI, when the MS accesses the network by the Random TLLI, e.g. when it is switched on, no information at all is available about the MS identity.

The Network Sharing in the 2G domain could be carried out in the CS domain by means of the NRI or of the IMSI, even if in this case only the pool-area(s) associated to the given operator can be addressed (No PLMN-ID selection applies due to differences between 2G and 3G; selected PLMN-Id cannot be signalled within 2G networks). In the PS domain no symmetric information to CS domain (that is IMSI) is provided. In the PS domain IMSI is not available and random TLLI is derived from the MS in an arbitrary way. Random TLLI does not contain the NRI so that in case of Network Sharing environment when Random TLLI is available, it is not possible for the BSC to select the proper CN pool network operator to route the MS based on subscription PLMN-ID; a CN pool may include just one node.

In conclusion, the MS that identifies itself with a Random TLLI inside a shared Base Station System (BSS), causes a non optimal routing of the Attach request; as a consequence an Attach Reject or a re-routing of the request SGSN side can be expected such that the subscriber could perceive a lack or a degraded service.

Known solutions valid for, e.g.: routing area update, cell update, Combined Attach Request, etc., make use of a "local TLLI" and a "foreign TLLI" relevant to the "new SGSN" and the "old SGSN", respectively. In a lot of known procedures, the new SGSN knows the identity of the old SGSN even if there is a many-to-many relationship between routing areas and SGSN nodes. This is possible, for example, because the MS has sent on the Request message (update/attach) the old TLLI and the RAI, as disclosed in WO 00/21319, and also in TS 23.060 - Figure 22 relevant to Combined GPRS / IMSI Attach Procedure with P-TMSI, see item 1 of same reference. Alternatively, the local SGSN can retrieve the foreign TLLI upon interrogation of the old SGSN, as reported in TS 23.060 - Figure 33. Clearly these known procedures are not actually proposable for the aim of the invention, as all based on Local and Foreign TLLI being the latter formerly originated by an old SGSN, while in the scope of the invention the Foreign TLLI and the old SGSN are completely nonexistent.

Consistently with the outlined technical problem, the concept of "serving network" is briefly discussed. According to TS 21.905 (3GPP Vocabulary), the Serving Network provides the user with access to the services of home environment. Therefore a "serving network" accounts for both roaming of the mobile station inside its own subscription network, namely the Home PLMN (HPLMN) and roaming inside a Visited PLMN (VPLMN). In the second case the VPLNM provides the packet service on behalf of the HPLMN, qualifying itself as a "partner network". Being the VPLMN also shared between several network operators (most probably the former ones), the same identification problem underlined for the BSC comes out in its entirety. This is consistent with all signalling flows reported in the relevant standardization, where the only differences between HPLMN-roaming and VPLMN-roaming is that in the second case the first MSC/SGSN accessed by the visiting mobile station must retrieves all useful information on this mobile from the Home Subscriber Server (HSS) of the HPLMN; this is accomplished through the Gateway MSC (GMSC) server. TS 23.002, Figure 1, titled: "Basic Configuration of a PLMN supporting CS and PS services and interfaces" shows the GMSC node interfaced to both HSS and PSTN, and the GGSN node interfaced to both SGSN node and other PLMNs. Location Updating procedures are detailed in TS 23.012, clause 19.1.1, fig.1-5. for CS and PS domains.

The "serving network" is necessarily configured as a VPLMN during the international roaming. In such a case foreign and national network operators might enforce partnership agreements advantageous for both parties, and as a consequence for the respective subscribers.

### OBJECT AND SUMMARY OF THE INVENTION

In view of the state of the art described, it is an object of the present invention to overcome the limitations highlighted for 2G packet data networks of the known art when the network is shared between different operators and the mobile stations that request to accede the packet network first time have different operator subscriptions, accordingly.

The invention achieves this object by providing a method to attach a mobile station to the packet service provided in a cellular network encompassing access and core networks shared between different operators, each operator providing the subscribers with a identifier of its own subscription network, called subscribed PLMN ID, enabling the mobile station of every subscriber to receive services from the serving network, as disclosed in the claims.

Accordingly, the method includes the following steps:
- the mobile station transmits a request to the access network to have a packet data channel assigned;
- the access network assigns to the mobile station a packet data channel and resources for transmitting in uplink;
- the mobile station provides a temporary identity information element, called TLLI, relevant to a link between the mobile station itself and the core network node that will be attached to provide the packet service;
- being the mobile station not yet registered to the network, it assembles a random TLLI including at least a first string of bits containing the PLMN ID stored in the SIM card and a second string of bits with all random logical values;
- the mobile station transmits to the Radio Access Network RLC/MAC blocks of an Attach Request message containing the TLLI assembled at the previous step and a data part transparent to the Base Station Controller;
- the access network intercepts the RLC/MAC blocks containing the attach request message and TLLI and routes the message towards a target core network node addressable by the PLMN ID that is read from the random TLLI;
- the target core network node receives the attach request message and decodes the TLLI as being completely random, thus it requests the mobile station to provide a valid identity.

As specified in 3GPP TS 23.122, in case the MS is without SIM card, the only Emergency Calls are allowed. The invention is not a bar for Emergency Calls.

The network identifier (PLMN ID), concatenated with the random substring, is either MCC+MNC or the only MNC. Both MCC and MNC are stored in the SIM card plugged into the mobile phone. The MCC+MNC allows international network sharing, while MNC only national network sharing. In such a way the invention effectively provides a remedy to the drawbacks pointed out when an existing 2G PS network (e.g. GPRS/EGPRS) is shared between several operators. In fact, the Random TLLI coded as in the method of the invention enable the 2G RAN node (e.g. the BSC) routing towards the subscription network the MS requests to have the packet service attached, directly (in case of national roaming in the subscribed Home PLMN), towards a partner network (in case of abroad roaming in a Visited PLMN).

Profitably, due to simply filling some bits in a specified way instead of randomly chosen, a small impact by the MSs is needed to build up the new Random TLLI code. MSs that do not provide "network information" in the Random TLLI are randomly routed by the BSC towards the CN nodes and their accesses are to be managed by the CN as usual.

Other subject of the invention is a cellular communication system, operating according to the method disclosed above.

Other subject of the invention is a mobile station arranged to provide a random TLLI arranged as such.

Other subject of the invention is an access network controller arranged to decode the random TLLI modified as said above and route the received message accordingly.

More in general, the invention can be used in those 2G packet radio systems that experiment the underlined limitations. A possible use with future GSM/GPRS/EGPRS releases is desirable.

### BRIEF DESCRIPTION OF THE DRAWINGS

The invention and its advantages may be understood with reference to the following detailed description of an embodiment thereof taken in conjunction with the accompanying drawings given for purely non-limiting explanatory purposes and wherein:
- fig.1, already described, shows the very general functional architecture of a 3GPP UMTS network shared between several operators from TS 23.251;
- fig.2, already described, shows an example of service pool-area configuration excerpt from TS 23.236;
- **fig.3****,** already described, depicts the partial content of the SIM card, pointing out the structure of the IMSI code reported in TS 23.003;
- **fig.4** shows the very general functional architecture of a 2G PLMN shared between two operators, and MSs transmitting a GPRS Attach Request message coded according to the method of the invention to be routed towards their own serving network;
- **fig.5a** shows the signalling flow for transmitting said GPRS Attach Request in the shared PLMN of fig.4, for a two phase access procedure;
- **fig. 5b** shows the signalling flow for one phase access procedure
- **figures 6** and **7** show the structure of an uplink RLC data block for GPRS and EGPRS respectively, including a Random TLLI coded according to the method of the invention;
- **fig.8a** shows the continuation of the signalling flow of fig.5a up to the GPRS attach is completed.
- **fig. 8b** shows the continuation of signalling flow of fig. 5b.

### DETAILED DESCRIPTION OF AN EMBODIMENT OF THE INVENTION

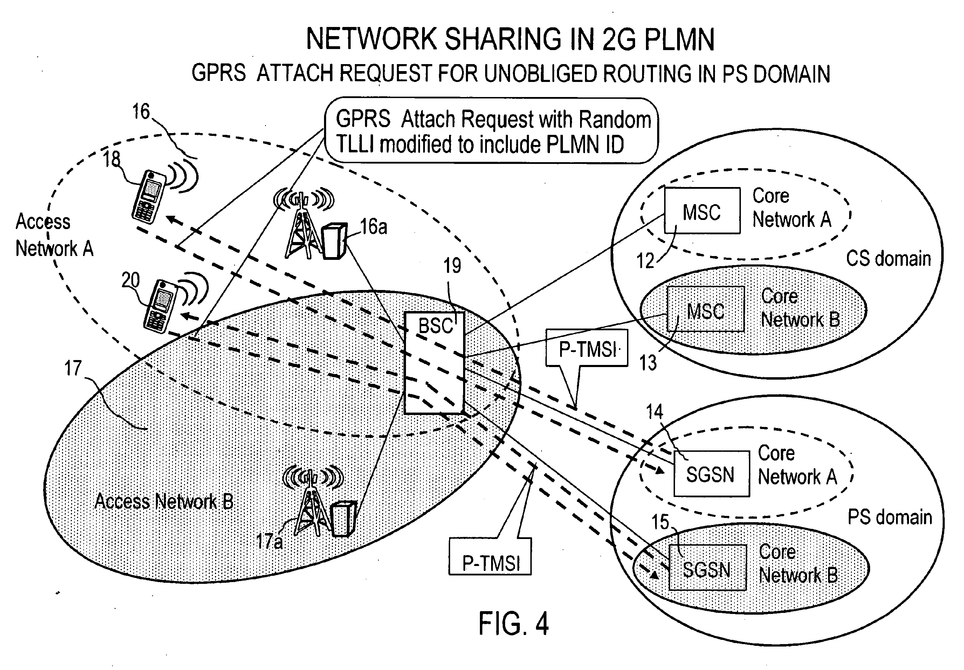

With reference to **fig.4**, we see a PLMN subdivided in CS domain and PS domain both shared between two (or more) network operators A and B, each one identifying its own network A or B by means of the PLMN ID included in the Cell Global ID broadcast in System Information type 3 (see TS 44.018) . The shared CS domain in the Core Network includes MSC 12 of a Core Network A and MCS 13 of a Core Network B. The shared PS domain in the Core Network includes a SGSN 14 of Core Network A and a SGSN 15 of Core Network B. The shared Radio Access Network (indifferently for CS and PS) includes Access Network A 16, and Access Network B 17, each one spanning the coverage area of respective Base Stations 16a, 17a (simplified in two only ones). A first cellular phone 18, subscribed to PLMN-ID A, is camped on the Access Network A. A second cellular phone 20, subscribed to PLMN ID B, is also camped on the same Access Network A. All the Base Stations are connected to a common Base Station Controller (BSC) 19. The latter is connected with both SGSNs 14, 15 and MSCs 12, 13 of the Core Networks A and B. A thicker dashed line in the figure idealizes a GPRS Attach Request issued by the MS 18, having a subscription with Network A, and MS 20, having a subscription with Network B. As it will be detailed hereafter, any ambiguity in the routing path of the Attach Request in the PS domain at the BSC 19 highlighted in the introduction is resolved by a special random TLLI generated locally in the MS 18 and MS 20, by inclusion of the PLMN ID read from the SIM card in the Random TLLI; in case of an Attach Request in CS domain, the IMSI is included, so the subscribed PLMN-ID is already included. When GPRS Attach is completed for the MS 18, the SGSN 14 of the subscription network assigns to the GPRS-attached MS 18 a Packet Temporary Mobile Subscriber Identity (P-TMSI) 32-bit long (see 3GPP TS 23.003). The P-TMSI is ciphered and forwarded to the MS 18, which stores it in the SIM card to be used to determine some bits of the TLLI. The assigned P-TMSI has only local significance within the SGSN 14 and its controlled area. The same steps are followed by SGSN 15 for MS 20.

The structure and general operation of the PLMN shown in **fig.4** are the ones described in **fig.2** for pool-areas the innovative random TLLI of the present invention.

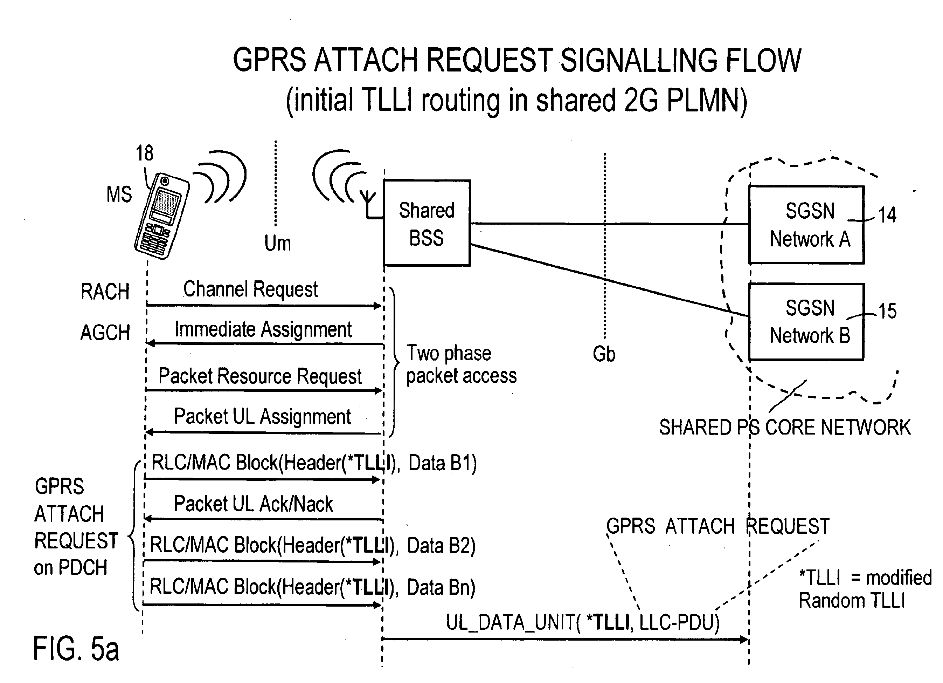

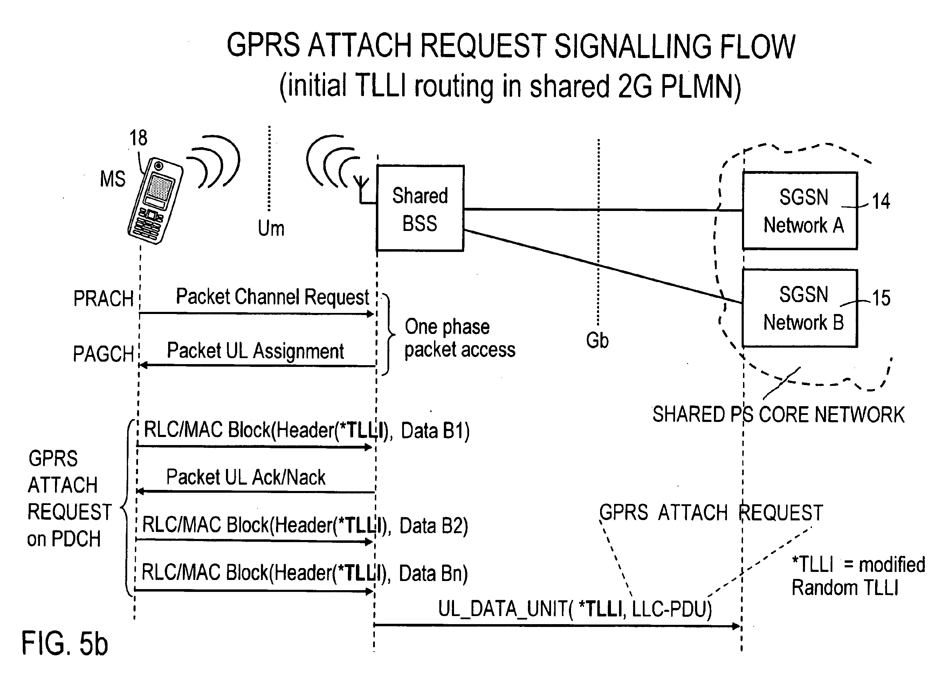

**Fig.5a** reports the signalling flow relevant to the GPRS Attach Request (thick dashed line of fig.4), for a two phase access procedure, established between the MS 18 and shared BSS (including the BSC 19 and both its controlled Base Stations 16a and 17a), and between BSS and the PS domain. **Fig.5b** shows the signalling flow for one phase access procedure. The MS 18 is supposed having already selected a cell at switch-on but not yet registered for packet service and thus without a P-TMSI. The MS 18 performs a channel request to have assigned an uplink packet channel to transmit the GPRS Attach Request message. The depicted signalling flow for channel request is preliminary to the inventive change introduced in the GPRS Attach Request message (that will be described below) for rendering it suitable to be correctly routed by the BSC 19 inside the shared BSS towards the subscription Network A. **Fig.5a** and **fig.5b** message flows apply as well to MS 20, BSC 19, and SGSN 15.

According to TS 23.060, in A/Gb mode the Mobility Management (MM) procedures shall use the LLC and RLC/MAC protocols for the transmission of messages across the Gb and Um interfaces, respectively. The MM procedures shall provide information to the underlying layers to enable reliable transmission of MM messages on the Um interface. GSM 43.064 defines the mapping between LLC and the used radio channels. If the MS is not GPRS-attached a valid P-TMSI is not yet available and the MS shall identify itself with Random TLLI (this is the unique case concerning the present invention) or a Foreign TLLI. The Random TLLI is used as an identifier during the attach procedure until a new P-TMSI is allocated.

With reference to **fig.5a****,** the signalling flow begins with the uplink access procedure for mobile originated packet transfer. Two phase packet access is used. Accordingly, the MS sends a Channel Request on RACH. The Packet Channel Request is responded by the network (the BSS) on AGCH with Immediate Assignment message reserving the resources on PDCH for uplink transfer of a number of Radio blocks. The reservation is done accordingly to the information about the requested resources that is comprised in the Packet Resource Request. If there is no response to the Channel Request within predefined time period, the MS makes a retry after a random back off time. Once a PDCH has been assigned, the MS uses it to send an Attach Request message. The Network Protocol Data Units (N-PDU) relevant to this message are segmented into the Subnetwork Protocol Data Units (SN-PDU) by the Subnetwork Dependent Convergence (SNDC) protocol, and SN-PDUs are encapsulated into one or several LLC frames. See GSM 23.060 for information on SNDC and LLC. The details on SNDC can be found in GSM 44.065 and the details on LLC can be found in GSM 44.064. LLC frames are segmented into RLC Uplink Data Blocks at the MS side and sent to the Network peer identity. At the RLC/MAC layer, a selective ARQ protocol (including block numbering) between the MS and the Network provides retransmission of erroneous RLC Data Blocks. The LLC frames are conveyed between MS and SGSN through the BSS acting as relay at the Gb interface.

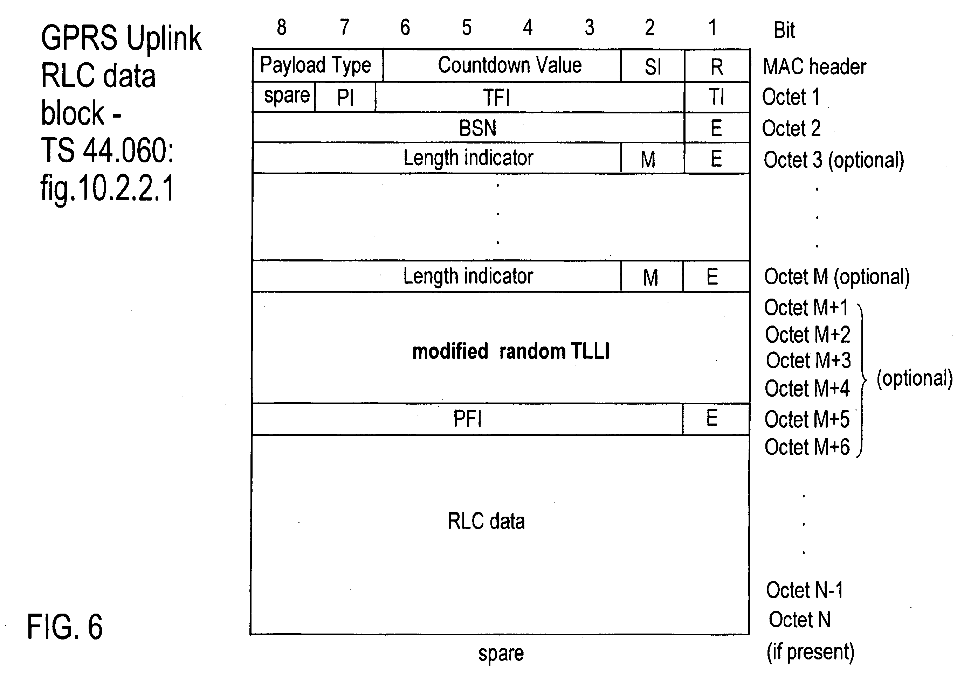

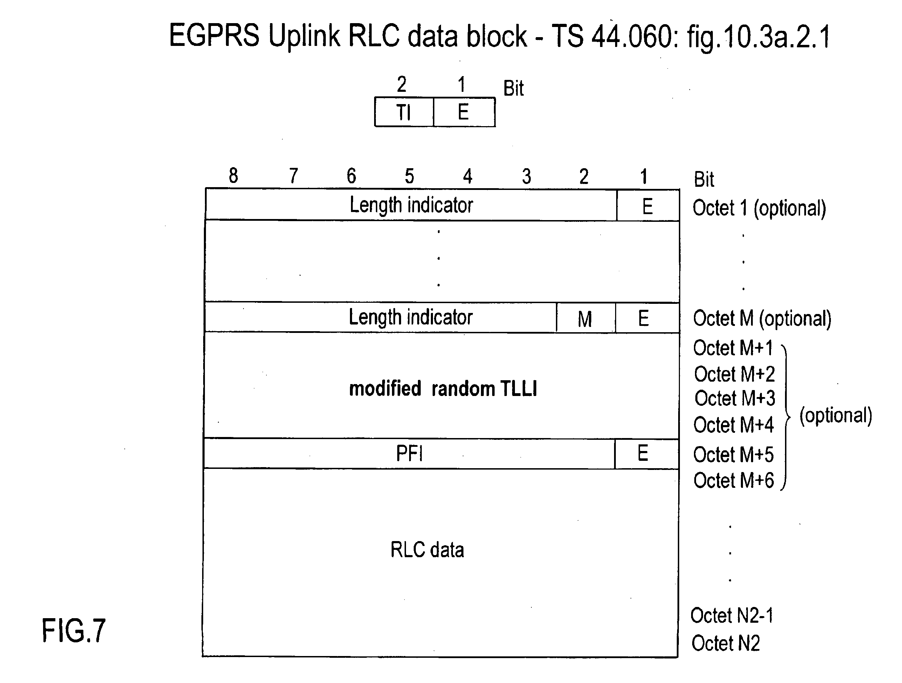

The structure of uplink RLC/MAC data blocks sent across the Um interface is described in **fig.6** for the GPRS and in **fig.7** for the EGPRS. The two figures are excerpt from TS 44.060: **fig.6** is the fig.10.2.2.1 and **fig.7** is the fig.10.3a.2.1. Details about the meaning of various fields are given in clause 10.4 "Header fields" of the same document. The modified random TLLI is obtained by modification of random TLLI reported in **TABLE 1** above, according to one of the alternative manners described the following points a), b) and c).
a) The network identification to be included in the Random TLLI may be the full PLMN ID information, where MCC on 3 digits and MNC on 2 or 3 digits are available in the IMSI known at the MS when the SIM card is plugged in. The MCC and the MNC are always coded in binary in 10 bits each one.
   In this case the Random TLLI is coded as follows:
   - from bit 31 to bit 27 the string "0 1111" in the same order (bit 31 = 0) as by TS 23.003;
   - from bit 26 to bit 17 the MCC;
   - from bit 16 to bit 7 the MNC;
   - from bit 6 to bit 0 = Random (R).
b) The network identification to be included in the Random TLLI may be the only MNC on 2 or 3 digits, always available in the IMSI, known at the MS when the SIM card is plugged in. The MNC is always coded in binary in 10 bits.
   In this case the Random TLLI is coded as follows:
   - from bit 31 to bit 27 the string "0 1111" in the same order (bit 31 = 0) as by TS 23.003;
   - from bit 26 to bit 17 the MNC
   - from bit 16 to bit 0 = Random (R).
c) The network identification to be included in the Random TLLI may be derived from the full MCC + MNC information but tailored on the MCC broadcasted in SI type 3 cell identity. If the broadcasted MCC equals the one stored in the MS SIM only MNC is included, leaving seven bits more available for random coding. In order to understand BSC side that only MNC is included, bits 26, 25, 24 are set to 0 (as in the MCC numbering range 0XX is reserved) and from 23 to 17 are random. in case the broadcasted MCC is not equal to the one read in the SIM, the full MCC+MNC is included.

For example: IMSI = 234150123456789, where MCC= 234 and MNC=15, so in binary over 10 bits, MCC = 0011101010 and MNC= 0000001111. The Random TLLI is coded in the following ways:
- Case a) Random TLLI = 0111100111010100000001111 RRRRRRR.
- Case b) Random TLLI = 011110000001111 RRRRRRRRRRRRRRRRR.
- Case c) with broadcast cell identity MCC=234 and IMSI above indicated, the Random TLLI = 01111000RRRRRRR0000001111RRRRRRR. With broadcast cell identity MCC≠ 234, case a) applies.

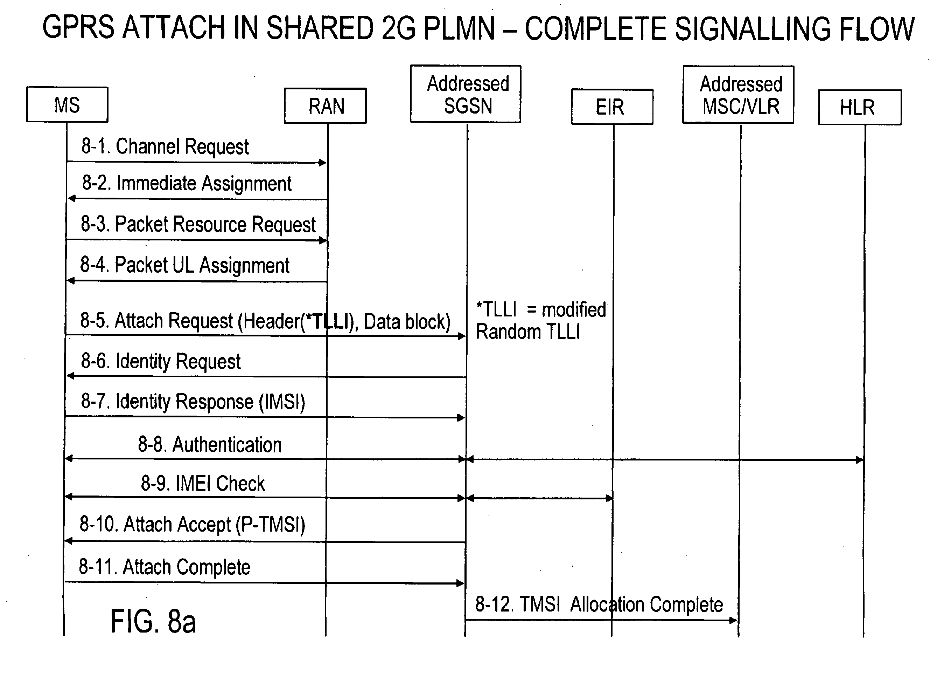

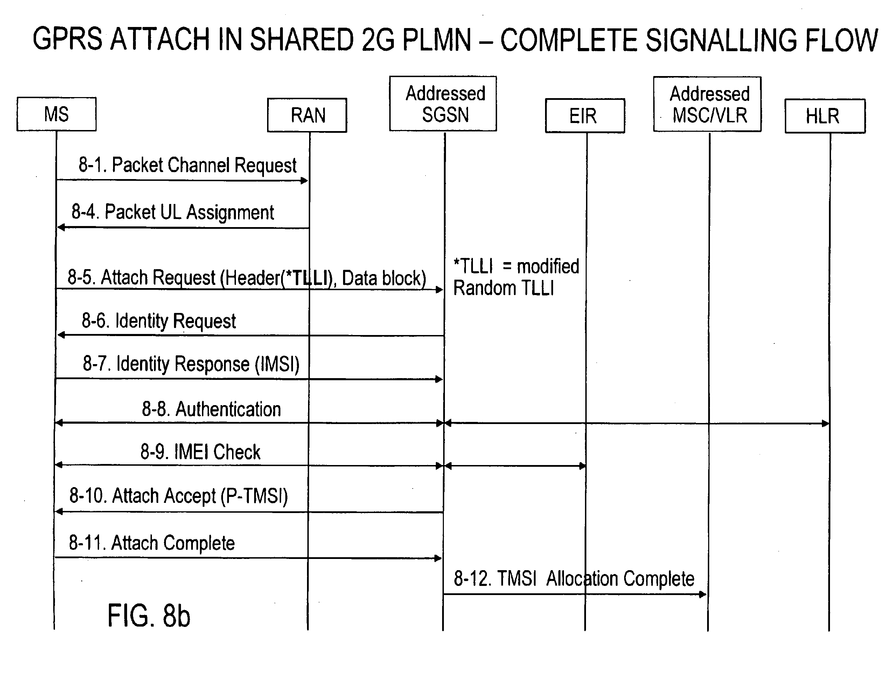

The complete signalling flow of GPRS Attach based on the only Random TLLI modified as said above is reported in **fig.8a** and **8b**.

With reference to **fig.8a**, the first five steps (8-1 to 8-5) are the ones of **fig.5a**. The MS 18 at step 8-5 sends to the BSC 19 an Attach Request message with embedded the modified random TLLI as mentioned before. The BSC 19 is put in the condition to address this message to the SGSN 14 of the Core Network A (fig.4). The addressed SGSN 14 receives the Attach Request message and decodes the TLLI field starting from the most significant five bits 31-27. Yet from bit 31 = 0 it understands that the received TLLI is not local or foreign; then the following four bits 30-27 = "1111" says that TLLI has a Random nature and does not convey an already registered MS identity, despite that part of IMSI, i.e. the subscribed PLMN ID, is concatenated with the remaining random bits: the modified random TLLI is transparent to SGSN, no modifications are needed as it interprets all bits 26 to 0 as completely random. The addressed SGSN 14 uses the random bits of TLLI to distinguish among the various coming packet flows that one that belongs to the specific MS identity.

According to subclause 6.5.3 of TS 23.060, when an invalid TLLI is detected, any access to the service (attach at first) is not prosecuted "tout court" until the subscriber is duly identified and authenticated by the network and the International Mobile Equipment Identity (IMEI) recognized as validly associated. These known signalling is provided by the sequential messages (8-6 to 8-9). More precisely, the addressed SGSN 14 that receives the Attach Request message 8-5 conveying a TLLI whose heading string indicates "random content", sends an Identity Request message 8-6 to the MS 18, which responds with the Identity Response message 8-7 including the IMSI. Then the SGSN 14 triggers an Authentication step (message 8-8) with both the MS 18 and the Home Location Register (HLR) to ensure that the user is authorised to be attached to the GPRS. Optionally, after authentication has been executed, the SGSN 14 triggers a check step on the International Mobile Station Equipment Identity (IMEI) (message 8-9) with both the MS 18 and the Equipment Identity Register (EIR). IMEI is a unique number which shall be allocated to each individual mobile station equipment in the PLMN and shall be unconditionally implemented by the MS manufacturer. IMEI code of 15 digits is defined in TS 23.003 subclause 6.2.1.

When the MS 18 is correctly identified (8-6, 8-7), Authenticated (8-8), and its IMEI recognized as valid (8-9), then the addressed SGSN 14 sends to the MS 18 an Attach Accept message 8-10 with included the appropriate P-TMSI code, so the subscriber is authorized to use the packet service. The allocated P-TMSI supplies MS 18 with a secure temporary identity recognized within the network A. The last messages 8-11 and 8-12 acknowledge the reception of Attach Accept message 8-10 at the SGSN 14 and the VLR 12, respectively. At this point the GPRS Attach has been positively completed and the MS 18 enters in the Ready state. From this time on the GPRS-attached MS 18 will generate accesses to the network A using a TLLI with local/foreign bits extracted from the assigned P-TMSI.

With reference to **fig.8b**, the first three steps (8-1, 8-4, and 8-5) are the ones of **fig.5b**, while the remaining steps (8-6 to 8-12) are the same as the preceding **Fig.8a. Figures 8a** and **8b** also apply to the MS 20 and the SGSN 15.

The method of the invention encompasses only some minimum modifications in software (and firmware) routines run by programmable processor means which govern the involved apparatuses, either fixed or mobile. The description of the invention provided above, considered together with the teaching of the referenced standards, allows the skilled person to modify the actual GSM/GPRS/EGPRS signalling protocols and messages, accordingly. Modifications affect the programming of both the MS and the BSC, while the SGSN is completely unaffected. Processor means are, e.g. microprocessors, ASICs, or other known integrated logical circuits.

Although the invention has been described with particular reference to a preferred embodiment for future GPRS/EGPRS, it will be evident to those skilled in the art, that the present invention is not limited thereto, but further variations and modifications may be applied without departing from the scope of the invention as defined by the annexed claims.

### USED ACRONYMS

- 3GPP: 3^{rd} Generation Partnership Program
- AGCH: Access Grant Channel
- ARQ: Automatic Repeat Request
- ASIC: Application-Specific Integrated Circuit
- BSC: Base Station Controller
- BSS: Base Station System
- BTS: Base Transceiver Station
- CN: Core Network
- CS: Circuit Switched
- EGPRS: Enhanced GPRS
- EIR: Equipment Identity Register
- ETSI: European Telecommunications Standards Institute
- GMSC: Gateway MSC
- GGSN: Gateway GPRS Support Node
- GPRS: General Packet Radio Service
- G-RNTI: GERAN Radio Network Temporary Identity
- GMSC: Gateway MSC
- GSM: Global System for Mobile communications
- GWCN: Gateway Core Network
- HLR: Home Location Register
- HPLMN: Home PLMN
- HSS: Home Subscriber Server
- IE: Information Element
- IMEI: International Mobile Station Equipment Identity
- IMSI: International Mobile Subscriber Identity
- LA: Location Area
- LLC: Logical Link Control
- MA: Mobile Allocation
- MA: Multiple Access
- MAC: Medium Access Control
- MCC: Mobile Country Code
- MM: Mobility Management
- MNC: Mobile Network Code
- MOCN: Multi-Operator Core Network
- MS: Mobile Station (or Subscriber)
- MSC: Mobile Switching Centre
- MSIN: Mobile Subscriber Identification Number
- NAS: Non Access Stratum
- NMSI: National Mobile Subscriber Identity
- O&M: Operation and Maintenance
- PA: Paging Area
- PDCH: Packet Data Channel
- PLMN: Public Land Mobile Network
- PS: Packet Switched
- PSPDN: Packet Switched Public Data Network
- PSTN: Public Switched Telephone Network
- P-TMSI: Packet Temporary Mobile Subscriber Identity
- RA: Routing Area
- RAI: Routing Area Identifier
- RAC: Routing Area Code
- RACH: Random Access Channel
- RAN: Radio Access Network
- RLC: Radio Link Control
- RNC: Radio Network Controller
- RNS: Radio Network Subsystem
- SGSN: Serving GPRS Support Node
- SI: System Information
- SIM: Subscriber Identity Module
- SNDCP: Subnetwork Dependent Convergence Protocol
- TE: Terminal Equipment
- TLLI: Temporary Logical Link Identity
- TMSI: Temporary Mobile Subscriber Identity
- UE: User Equipment
- UTRAN: UMTS Terrestrial Radio Access Network
- VLR: Visitor Location Register
- VPLMN: Visited PLMN

## Claims

1. Method to attach a mobile station (18, 20) to the packet service provided in a cellular network encompassing access (16a, 17a, 19), called radio access network hereafter, and core networks (12, 13, 14, 15) shared between different operators, each operator providing the subscribers with a identifier of its own subscription network, called PLMN ID, enabling the mobile station (18, 20) of every subscriber to receive services from the serving network, the method including the following steps:
- the mobile station (18, 20) transmits a request (8-1, 8-3) to the radio access network (16a, 17a, 19) to have a packet data channel assigned and resources for transmitting to the network;
- the radio access network (16a, 17a, 19) transmits an assignment message (8-2, 8-4) for assigning to the mobile station the requested packet data channel and resources;
- the mobile station (18, 20) transmits to the radio access network data blocks containing a request message (8-5) to be attached to the packet service provided by the core network (14, 15), said message including a temporary identity, called TLLI hereafter, which includes a string of bits generated by the mobile station (18, 20) with random logical value,
**characterized in that**,
- the mobile station (18, 20), before transmitting the attach request message (8-5), replaces part of random bits with its subscription PLMN ID (MCC, MNC) stored locally;
- the mobile station (18,20) transmits to the radio access network the attach request message containing the TLLI assembled at the previous step and a data part transparent to a base station controller;
- the radio access network (16a, 17a, 19) intercepts the attach request message (8-5) and routes it towards a target core network node (14, 15) addressable by the PLMN ID read from the TLLI included in the intercepted message (8-5);
- the target core network node (14, 15) receives the attach request message (8a-5) and decodes the TLLI as being completely random, thus it requests the mobile station (18, 20) to provide a valid identity (8-6).

2. The method of claim 1, **characterized in that** said string of bits includes heading bits coded to specify the random nature of the TLLI.

3. The method of claim 2, **characterized in that** said PLMN ID includes a first substring (MNC) that identifies uniquely the home network of the mobile subscriber inside its own country of domicile (MCC).

4. The method of claim 3, **characterized in that** said PLMN ID includes a second substring (MCC) that identifies uniquely the country of domicile of the mobile subscriber.

5. The method of claim 3, **characterized in that** the radio access network (16a, 17a, 19) broadcasts information (MCC) about the country of domicile of the network operator owner of the access network itself, and the country of domicile (MCC) of the mobile subscriber coincides with said country of domicile of the network operator, then said PLMN ID includes a further substring shorter than the first one, which informs the radio access network (16a, 17a, 19) that only the first substring (MNC) is further included in said PLMN ID.

6. The method of any claim from 1 to 5, **characterized in that** the target core network node (14, 15) after having received a temporary identity (8-7) from the mobile station (18, 20), triggers an authentication step (8-8) of the subscriber with both the mobile station (18, 20) and the home location register (HLR) to ascertain the authorization to access the packet service.

7. The method of claim 6, **characterized in that** the target core network node (14, 15) after the subscriber has been authenticated (8-8), triggers a validity check (8-9) on the international identity of the equipment constituting the mobile station (18, 20) with both the mobile station (18, 20) and a register containing said international identities.

8. The method of claim 6 or 7, **characterized in that** the target core network node (14, 15) sends to the mobile station (18, 20) an Attach Accept message (8-10) with included a ciphered Packet Temporary Mobile Subscriber Identity, called P-TMSI, which has local significance within the controlled area of said target core network node (14, 15).

9. The method of claim 8, **characterized in that** the mobile station (18, 20) stores in the SIM card the received P-TMSI to successively extract a core network node identifier usable for assembling a next TLLI relevant to a link to be established between the mobile station (18, 20) and another node of the same subscription core network.

10. A cellular communication system encompassing access (16a, 17a, 19), called radio access network hereafter, and core networks (12, 13, 14, 15) shared between different operators, each operator providing the subscribers with a identifier of its own subscription network, called PLMN ID, enabling the mobile station (18, 20) of every subscriber to receive services from the serving network, **characterized in that**,
- the mobile station (18, 20) is configured for assembling a temporary identity, called TLLI, including:
- a heading string of bits whose meaning is that all remaining bits of TLLI have random logical values;
- a first string of bits that includes the PLMN ID code (MCC, MNC) stored locally;
- a second string of bits with all random logical values;
- the mobile station (18, 20) is further configured for
- including said TLLI in a message forwarded to the core network (14, 15) to request of being attached to the packet service;
- transmitting a request to the radio access network to have a packet data channel assigned and resources for transmitting to the network;
- the radio access network (16a, 17a, 19) is configured for
- intercepting the attach request message and routing it towards a target core network node (14, 15) addressable by the PLMN ID included in the message;
- transmitting an assignment message for assigning to the mobile station the requested packet data channel resources;
- the target core network node (14, 15) is configured for decoding said TLLI included in the received attach request message and requesting the mobile station (18, 20) to provide a valid identity.

11. A mobile station (18, 20) configured for operating in a cellular communication system (16a, 17a, 19, 12, 13, 14, 15) first transmitting a request (8-1, 8-3) to the access network (16a, 17a, 19) being configured to transmit an assignment for assigning to the mobile station the requested packet data channel and resources to have a packet data channel assigned and resources for transmitting to the network and receiving an assignment message from the radio access network for assigning the requested packet data channel and resources; second on the basis of a locally stored subscription network identifier, called PLMN ID, **characterized in that** includes processor means programmed for:
- assembling a temporary identity, called TLLI, including:
- a heading string of bits whose meaning is that all remaining bits of TLLI have random logical values;
- a first string of bits that includes said PLMN ID code (MCC, MNC);
- a second string of bits with all random logical values;
- introducing said TLLI in a message forwarded to the core network (14, 15) to request of being attached to the packet service.

12. An access network controller (19) configured for operating inside a second generation cellular communication system (16a, 17a, 19, 12, 13, 14, 15) shared between different operators, each operator providing the subscribers with a identifier of its own subscription network, called PLMN ID, enabling the mobile station (18, 20) to receive services from the serving network, said base station controller (19) being **characterized in that** includes processor means programmed for:
- intercepting request messages (8-1, 8-3) originated by the mobile station (18, 20) for being assigned a packet data channel and resources for transmitting to the network;
- transmitting an assignment message (8-2, 8-4) to the mobile station for assigning the requested packet data channel and resources;
- intercepting request messages originated by the mobile stations (18, 20) for being attached to the packet service, said messages carrying a temporary identity, called TLLI, and decoding from said TLLI:
- a heading string of bits whose meaning is that all remaining bits of TLLI have random logical values;
- a subsequent string of bits that includes said PLMN ID code (MCC, MNC);
- routing every intercepted message towards a core network node (14, 15) addressable by decoded PLMN ID.

## Patentansprüche

1. Verfahren zum Anbinden einer Mobilstation (18, 20) an den Paketdienst, der in einem zellulären Netz bereitgestellt wird, die Zugriffsnetze (16a, 17a, 19), die im Folgenden Funkzugriffsnetz genannt werden, und Kernnetze (12, 13, 14, 15), die zwischen verschiedenen Betreibern gemeinsam genutzt werden, umfasst, wobei jeder Betreiber die Teilnehmer mit einer Kennung seines eigenen Teilnehmernetzes, die PLMN ID genannt wird, versieht, die die Mobilstation (18, 20) jedes Teilnehmers in die Lage versetzt, Dienste von dem dienenden Netz zu empfangen, wobei das Verfahren die folgenden Schritte umfasst:
- die Mobilstation (18, 20) sendet eine Anforderung (8-1, 8-3) zu dem Funkzugriffsnetz (16a, 17a, 19), damit ihr ein Paketdatenkanal zugewiesen wird und damit sie Betriebsmittel zum Senden zu dem Netz erhält;
- das Funkzugriffsnetz (16a, 17a, 19) sendet eine Zuweisungsnachricht (8-2, 8-4) zum Zuweisen des angeforderten Paketdatenkanals und der Betriebsmittel zu der Mobilstation;
- die Mobilstation (18, 20) sendet zu dem Funkzugriffsnetz Datenblöcke, die eine Anforderungsnachricht (8-5) enthalten, um an den Paketdienst, der durch das Kernnetz (14, 15) bereitgestellt wird, angebunden zu werden, wobei die Nachricht eine temporäre Kennung, die im Folgenden TLLI genannt wird, enthält, die einen Bit-String enthält, der durch die Mobilstation (18, 20) mit zufälligem logischen Wert erzeugt wird,
**dadurch gekennzeichnet, dass**
- die Mobilstation (18, 20) vor dem Senden der Anbindungsanforderungsnachricht (8-5) einen Teil der zufälligen Bits durch ihre Teilnehmer-PLMN ID (MCC, MNC), die lokal gespeichert ist, ersetzt;
- die Mobilstation (18, 20) zu dem Funkzugriffsnetz die Anbindungsanforderungsnachricht, die die TLLI enthält und im vorhergehenden Schritt gebildet worden ist, und einen Datenteil, der für einen Basisstations-Controller transparent ist, sendet;
- das Funkzugriffsnetz (16a, 17a, 19) die Anbindungsanforderungsnachricht (8-5) abfängt und zu einem Ziel-Kernnetzknoten (14, 15) lenkt, der durch die PLMN ID adressierbar ist, die aus der TLLI gelesen wird, die in der abgefangenen Nachricht (8-5) enthalten ist;
- der Ziel-Kernnetzknoten (14, 15) die Anbindungsanforderungsnachricht (8a-5) empfängt und die TLLI als vollkommen zufällig decodiert, so dass er die Mobilstation (18, 20) auffordert, eine gültige Kennung (8-6) bereitzustellen.

2. Verfahren nach Anspruch 1, **dadurch gekennzeichnet, dass** der Bit-String Kopfbits enthält, die codiert sind, um die zufällige Natur der TLLI zu spezifizieren.

3. Verfahren nach Anspruch 2, **dadurch gekennzeichnet, dass** die PLMN ID einen ersten Unter-String (MNC) enthält, der das Heimatnetz des mobilen Teilnehmers in seinem eigenen Heimatland (MCC) eindeutig identifiziert.

4. Verfahren nach Anspruch 3, **dadurch gekennzeichnet, dass** die PLMN ID einen zweiten Unter-String (MCC) enthält, der das Heimatland des mobilen Teilnehmers eindeutig identifiziert.

5. Verfahren nach Anspruch 3, **dadurch gekennzeichnet, dass** das Funkzugriffsnetz (16a, 17a, 19) Informationen (MCC) über das Heimatland des Netzbetreiber-Eigentümers des Zugriffsnetzes selbst rundsendet, wobei dann, wenn das Heimatland (MCC) des mobilen Teilnehmers mit dem Heimatland des Netzbetreibers übereinstimmt, die PLMN ID einen weiteren Unter-String enthält, der kürzer als der erste ist und das Funkzugriffsnetz (16a, 17a, 19) darüber informiert, das weiterhin nur der erste Unter-String (MNC) in der PLMN ID enthalten ist.

6. Verfahren nach einem der Ansprüche 1 bis 5, **dadurch gekennzeichnet, dass** der Ziel-Kernnetzknoten (14, 15), nachdem er eine temporäre Kennung (8-7) von der Mobilstation (18, 20) empfangen hat, einen Authentifizierungsschritt (8-8) des Teilnehmers sowohl mit der Mobilstation (18, 20) als auch mit dem Heimatortsregister (HLR) auslöst, um die Authentifizierung für den Zugriff auf den Paketdienst sicherzustellen.

7. Verfahren nach Anspruch 6, **dadurch gekennzeichnet, dass** der Ziel-Kernnetzknoten (14, 15) dann, wenn der Teilnehmer authentifiziert worden ist (8-8), eine Gültigkeitsprüfung (8-9) bezüglich der internationalen Identität des die Mobilstation (18, 20) bildenden Geräts sowohl mit der Mobilstation (18, 20) als auch mit einem die internationalen Identitäten enthaltenden Register auslöst.

8. Verfahren nach Anspruch 6 oder 7, **dadurch gekennzeichnet, dass** der Ziel-Kernnetzknoten (14, 15) zu der Mobilstation (18, 20) eine Anbindungsakzeptanz-Nachricht (8-10) sendet, in der eine verschlüsselte temporäre Mobilteilnehmerkennung des Pakets, die P-TMSI genannt wird, enthalten ist, die eine lokale Bedeutung in dem kontrollierten Bereich des Ziel-Kernnetzknotens (14, 15) hat.

9. Verfahren nach Anspruch 8, **dadurch gekennzeichnet, dass** die Mobilstation (18, 20) in der SIM-Karte die empfangene P-TMSI speichert, um anschließend eine Kernnetzknoten-Kennung zu extrahieren, die für die Zusammenfügung einer nächsten TLLI verwendbar ist, die für eine aufzubauende Übertragungsstrecke zwischen der Mobilstation (18, 20) und einem weiteren Knoten desselben Teilnehmerkernnetzes relevant ist.

10. Zellenkommunikationssystem, das Zugriffsnetze (16a, 17a, 19), die im Folgenden Funkzugriffsnetz genannt werden, und Kernnetze (12, 13, 14, 15), die zwischen verschiedenen Betreibern gemeinsam genutzt werden, umfasst, wobei jeder Betreiber die Teilnehmer mit einer Kennung seines eigenen Teilnehmernetzes, die PLMN ID genannt wird, versieht, die die Mobilstation (18, 20) jedes Teilnehmers in die Lage versetzt, Dienste von dem dienenden Netz zu empfangen, **dadurch gekennzeichnet, dass**
- die Mobilstation (18, 20) konfiguriert ist, eine temporäre Kennung, die TLLI genannt wird, zusammenzufügen, die Folgendes enthält:
- einen Kopf-Bit-String, dessen Bedeutung darin besteht, dass alle verbleibenden Bits der TLLI zufällige logische Werte haben;
- einen ersten Bit-String, der den PLMN ID Code (MCC, MNC) enthält, der lokal gespeichert ist;
- einen zweiten Bit-String mit allen zufälligen logischen Werten;
- die Mobilstation (18, 20) ferner konfiguriert ist,
- die TLLI in eine Nachricht aufzunehmen, die zu dem Kernnetz (14, 15) weitergeleitet wird, um anzufordern, an den Paketdienst angebunden zu werden;
- eine Anforderung zu dem Funkzugriffsnetz zu senden, damit ihr ein Paketdatenkanal zugewiesen wird und damit sie Betriebsmittel zum Senden zu dem Netz erhält;
- das Funkzugriffsnetz (16a, 17a, 19) konfiguriert ist,
- die Anbindungsanforderungsnachricht abzufangen und zu einem Ziel-Kernnetzknoten (14, 15) zu lenken, der durch die in der Nachricht enthaltene PLMN ID adressierbar ist; und
- eine Zuweisungsnachricht zum Zuweisen der angeforderten Paketdatenkanal-Betriebsmittel zu der Mobilstation zu senden;
- der Ziel-Kernnetzknoten (14, 15) konfiguriert ist, die in der empfangenen Anbindungsanforderungsnachricht enthaltene TLLI zu decodieren und um die Mobilstation (18, 20) aufzufordern, eine gültige Kennung bereitzustellen.

11. Mobilstation (18, 20), die konfiguriert ist, in einem Zellenkommunikationssystem (16a, 17a, 19, 12, 13, 14, 15) zu arbeiten, um erstens eine Anforderung (8-1, 8-3) zu dem Zugriffsnetz (16a, 17a, 19) zu senden, das konfiguriert ist, eine Zuweisung zum Zuweisen des angeforderten Paketdatenkanals und von Betriebsmitteln zu der Mobilstation zu senden, damit sie einen zugewiesenen Paketdatenkanal und Betriebsmittel zum Senden zu dem Netz und zum Empfangen einer Zuweisungsnachricht von dem Funkzugriffsnetz zum Zuweisen des angeforderten Paketdatenkanals und der Betriebsmittel erhält; und zweitens auf der Grundlage einer lokal gespeicherten Teilnehmernetzkennung, die PLMN ID genannt wird, **dadurch gekennzeichnet ist, dass** sie Prozessormittel enthält, die programmiert sind, um:
- eine temporäre Kennung, die TLLI genannt wird, zusammenzufügen, die Folgendes enthält:
- einen Kopf-Bit-String, dessen Bedeutung darin besteht, dass alle verbleibenden Bits der TLLI zufällige logische Werte haben;
- einen ersten Bit-String, der den PLMN ID Code (MCC, MNC) enthält;
- einen zweiten Bit-String mit allen zufälligen logischen Werten;
- die TLLI in eine Nachricht einzubauen, die zu dem Kernnetz (14, 15) weitergeleitet wird, um anzufordern, an den Paketdienst angebunden zu werden.

12. Zugriffsnetz-Controller (19), der konfiguriert ist, in einem Zellenkommunikationssystem (16a, 17a, 19, 12, 13, 14, 15) der zweiten Generation, das zwischen verschiedenen Betreibern gemeinsam genutzt wird, zu arbeiten, wobei jeder Betreiber die Teilnehmer mit einer Kennung seines eigenen Teilnehmernetzes, die PLNM ID genannt wird, versieht, die die Mobilstation (18, 20) in die Lage versetzt, von dem dienenden Netz Dienste zu empfangen, wobei der Basisstations-Controller (19) **dadurch gekennzeichnet ist, dass** er Prozessormittel enthält, die programmiert sind, um:
- Anforderungsnachrichten (8-1, 8-3), die von der Mobilstation (18, 20) ausgehen, abzufangen, damit ihr ein Paketdatenkanal und Betriebsmittel zum Senden zu dem Netz zugewiesen werden;
- eine Zuweisungsnachricht (8-2, 8-4) zu der Mobilstation zu senden, um den angeforderten Paketdatenkanal und die angeforderten Betriebsmittel zuzuweisen;
- Anforderungsnachrichten, die von den Mobilstationen (18, 20) ausgehen, um an den Paketdienst angebunden zu werden, abzufangen, wobei die Nachrichten temporäre Kennungen, die TLLI genannt werden, transportieren, und um aus der TLLI zu decodieren:
- einen Kopf-Bit-String, dessen Bedeutung darin besteht, dass alle verbleibenden Bits der TLLI zufällige logische Werte haben;
- einen nachfolgenden Bit-String, der den PLMN ID-Code (MCC, MNC) enthält;
- jede abgefangene Nachricht zu einem Kernnetzknoten (14, 15) zu lenken, der durch die decodierte PLMN ID adressierbar ist.

## Revendications

1. Un procédé de rattachement d'une station mobile (18, 20) au service à commutation de paquets fourni dans un accès englobant un réseau cellulaire (16a, 17a, 19), appelé réseau d'accès radio ci-après, et des réseaux centraux (12, 13, 14, 15) partagés entre différents opérateurs, chaque opérateur fournissant aux abonnés un identifiant de son propre réseau d'abonnement, appelé ID de PLMN, permettant à la station mobile (18, 20) de chaque abonné de recevoir des services provenant du réseau de desserte, le procédé comprenant les opérations suivante :
- la station mobile (18, 20) transmet une demande (8-1, 8-3) au réseau d'accès radio (16a, 17a, 19) afin de se voir attribuer un canal de données par paquets et des ressources pour transmission au réseau,
- le réseau d'accès radio (16a, 17a, 19) transmet un message d'attribution (8-2, 8-4) destiné à attribuer à la station mobile le canal de données par paquets et les ressources demandés,
- la station mobile (18, 20) transmet au réseau d'accès radio des blocs de données contenant un message de demande (8-5) à attacher au service à commutation de paquets fourni par le réseau central (14, 15), ledit message comprenant une identité temporaire, appelée ci-après TLLI, qui comprend une chaîne de bits générée par la station mobile (18, 20) avec une valeur logique aléatoire,
**caractérisé en ce que**,
- la station mobile (18, 20), avant de transmettre le message de demande de rattachement (8-5), remplace une partie des bits aléatoires par son ID de PLMN d'abonnement (MCC, MNC) conservé en mémoire localement,
- la station mobile (18, 20) transmet au réseau d'accès radio le message de demande de rattachement contenant la TLLI assemblée à l'opération précédente et une partie de données transparente à un système de commande de station de base,
- le réseau d'accès radio (16a, 17a, 19) intercepte le message de demande de rattachement (8-5) et l'achemine vers un noeud de réseau central cible (14, 15) adressable par l'ID de PLMN lu à partir de la TLLI incluse dans le message intercepté (8-5),
- le noeud de réseau central cible (14, 15) reçoit le message de demande de rattachement (8a-5) et décode la TLLI comme étant totalement aléatoire, et en conséquence il demande à la station mobile (18, 20) de fournir une identité valide (8-6).

2. Le procédé selon la revendication 1, **caractérisé en ce que** ladite chaîne de bits comprend des bits d'en-tête codés de façon à spécifier la nature aléatoire de la TLLI.

3. Le procédé selon la revendication 2, **caractérisé en ce que** ledit ID de PLMN comprend une première sous-chaîne (MNC) qui identifie de manière unique le réseau d'origine de l'abonné mobile à l'intérieur de son propre pays de résidence (MCC).

4. Le procédé selon la revendication 3, **caractérisé en ce que** ledit ID de PLMN comprend une deuxième sous-chaîne (MCC) qui identifie de manière unique le pays de résidence de l'abonné mobile.

5. Le procédé selon la revendication 3, **caractérisé en ce que** le réseau d'accès radio (16a, 17a, 19) diffuse des informations (MCC) relatives au pays de résidence du propriétaire de l'opérateur de réseau du réseau d'accès lui-même, et le pays de résidence (MCC) de l'abonné mobile coïncide avec ledit pays de résidence de l'opérateur de réseau, ensuite ledit ID de PLMN comprend une autre sous-chaîne plus courte que la première, qui informe le réseau d'accès radio (16a, 17a, 19) que seulement la première sous-chaîne (MNC) est incluse en outre dans ledit ID de PLMN.

6. Le procédé selon l'une quelconque des revendications 1 à 5, **caractérisé en ce que** le noeud de réseau central cible (14, 15) après avoir reçu une identité temporaire (8-7) de la station mobile (18, 20), déclenche une opération d'authentification (8-8) de l'abonné vis-à-vis de à la fois la station mobile (18, 20) et le registre de localisation nominale (HLR) de façon à confirmer l'autorisation d'accès au service à commutation de paquets.

7. Le procédé selon la revendication 6, **caractérisé en ce que** le noeud de réseau central cible (14, 15), une fois que l'abonné a été authentifié (8-8), déclenche un contrôle de validité (8-9) de l'identité internationale de l'équipement constituant la station mobile (18, 20) vis-à-vis de à la fois la station mobile (18, 20) et un registre contenant lesdites identités internationales.

8. Le procédé selon la revendication 6 ou 7, **caractérisé en ce que** le noeud de réseau central cible (14, 15) envoie à la station mobile (18, 20) un message d'acceptation de rattachement (8-10) qui contient une identité d'abonné mobile temporaire à paquets chiffrée, appelée P-TMSI, qui a une signification locale à l'intérieur de la zone contrôlée dudit noeud de réseau central cible (14, 15).

9. Le procédé selon la revendication 8, **caractérisé en ce que** la station mobile (18, 20) conserve en mémoire dans la carte SIM la P-TMSI reçue de façon à extraire successivement un identifiant de noeud de réseau central utilisable pour assembler une TLLI suivante pertinente pour une liaison à établir entre la station mobile (18, 20) et un autre noeud du même réseau central d'abonnement.

10. Un système de communication cellulaire englobant un accès (16a, 17a, 19), appelé ci-après réseau d'accès radio, et des réseaux centraux (12, 13, 14, 15) partagés entre différents opérateurs, chaque opérateur fournissant aux abonnés un identifiant de son propre réseau d'abonnement, appelé ID de PLMN, permettant à la station mobile (18, 20) de chaque abonné de recevoir des services provenant du réseau de desserte, **caractérisé en ce que**,
- la station mobile (18, 20) est configurée de façon à assembler une identité temporaire, appelée TLLI, comprenant :
- une chaîne de bits d'entête dont la signification est que tous les bits restants de la TLLI ont des valeurs logiques aléatoires,
- une première chaîne de bits qui comprend le code de l'ID de PLMN (MCC, MNC) conservé en mémoire localement,
- une deuxième chaîne de bits avec toutes les valeurs logiques aléatoires,
- la station mobile (18, 20) est configurée en outre de façon à
- inclure ladite TLLI dans un message transmis au réseau central (14, 15) destiné à demander d'être rattaché au service à commutation de paquets,
- la transmission d'une demande au réseau d'accès radio afin de se voir attribuer un canal de données par paquets et des ressources pour transmission au réseau,
- le réseau d'accès radio (16a, 17a, 19) est configuré de façon à
- intercepter le message de demande de rattachement et à l'acheminer vers un noeud de réseau central cible (14, 15) adressable par l'ID de PLMN inclus dans le message,
- transmettre un message d'attribution destiné à attribuer à la station mobile les ressources de canal de données par paquets demandées,
- le noeud de réseau central cible (14, 15) est configuré de façon à décoder ladite TLLI incluse dans le message de demande de rattachement reçu et à demander à la station mobile (18, 20) de fournir une identité valide.

11. Une station mobile (18, 20) configurée de façon à fonctionner dans un système de communication cellulaire (16a, 17a, 19, 12, 13, 14, 15) en premier lieu transmettant une demande (8-1, 8-3) au réseau d'accès (16a, 17a, 19) étant configuré de façon à transmettre une attribution destinée à l'attribution à la station mobile du canal de données par paquets et des ressources demandés de façon à se voir attribuer un canal de données par paquets et des ressources pour transmission au réseau et à recevoir un message d'attribution provenant du réseau d'accès radio destiné à attribuer le canal de données par paquets et les ressources demandés, en deuxième lieu, en fonction d'un identifiant de réseau d'abonnement conservé en mémoire localement, appelé ID de PLMN, **caractérisé en ce qu'**il comprend un moyen de processeur programmé de façon à :
- assembler une identité temporaire, appelée TLLI, comprenant :
- une chaîne de bits d'entête dont la signification est que tous les bits restants de la TLLI ont des valeurs logiques aléatoires,
- une première chaîne de bits qui comprend ledit ID de PLMN code (MCC, MNC),
- une deuxième chaîne de bits avec toutes les valeurs logiques aléatoires,
- l'introduction de ladite TLLI dans un message transmis au réseau central (14, 15) destiné à demander à être rattaché au service à commutation de paquets.

12. Un système de commande de réseau d'accès (19) configuré de façon à fonctionner à l'intérieur d'un système de communication cellulaire de deuxième génération (16a, 17a, 19, 12, 13, 14, 15) partagé entre différents opérateurs, chaque opérateur fournissant aux abonnés un identifiant de son propre réseau d'abonnement, appelé ID de PLMN, permettant à la station mobile (18, 20) de recevoir des services provenant du réseau de desserte, ledit système de commande de station de base (19) étant **caractérisé en ce qu'**il comprend un moyen de processeur programmé de façon à :
- intercepter des messages de demande (8-1, 8-3) créés par la station mobile (18, 20) destinés à voir attribuer un canal de données par paquets et des ressources pour transmission au réseau,
- transmettre un message d'attribution (8-2, 8-4) à la station mobile destiné à attribuer le canal de données par paquets et les ressources demandés,
- intercepter des messages de demande créés par les stations mobiles (18, 20) destinés à voir attacher au service à commutation de paquets lesdits messages transportant une identité temporaire, appelée TLLI, et à décoder à partir de ladite TLLI :
- une chaîne de bits d'entête dont la signification est que tous les bits restants de la TLLI ont des valeurs logiques aléatoires,
- une chaîne de bits subséquente qui comprend ledit ID de PLMN code (MCC, MNC),
- acheminer tous les messages interceptés vers un noeud de réseau central (14, 15) adressable par un ID de PLMN décodé.
